# EUROPEAN PATENT APPLICATION

(11) **EP 4 813 705 A1**
(43) Date of publication of application: **30.09.2026**
(21) Application number: 26166658.0
(22) Date of filing: 23.03.2026
(51) Int. Cl.: B60K 1/04

(54) **VEHICLE BATTERY INSTALLATION STRUCTURE**

(30) Priority: 26.03.2025 JP 2025052322
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken, 471-8571 (JP); MARUHASHI, Motokuni, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A vehicle battery installation structure including an upper cover arranged above an energy storage cell, a cross member spanning in a vehicle width direction above the upper cover, and an equipment case arranged above the upper cover and at a vehicle rear side of the cross member, with equipment housed inside the equipment case. At least part of the equipment case and at least part of the cross member are arranged so as to oppose each other in a vehicle front-rear direction.

## Description

### BACKGROUND

### Technical Field

The present disclosure relates to a vehicle battery installation structure.

### Related Art

Japanese Patent Application Laid-Open (JP-A) No. 2020-173918 discloses a configuration in which energy storage modules are arranged so as to be superimposed above and below each other inside a vehicle.

Sometimes in a layout of space in a vehicle equipment electrically connected to energy storage cells is arranged above the energy storage cells. In such cases there is a possibility that the equipment might displace under inertia or the like when input with an external load.

### SUMMARY

In consideration of the above circumstances, an object of the present disclosure is, in a configuration in which equipment is arranged above an energy storage cell, to provide a vehicle battery installation structure capable of suppressing the equipment from displacing under input of an external load.

A vehicle battery installation structure of a first aspect includes an upper cover arranged above an energy storage cell, a cross member spanning in a vehicle width direction above the upper cover, and an equipment case arranged above the upper cover and at a vehicle rear side of the cross member, with equipment housed inside the equipment case. At least part of the equipment case and at least part of the cross member are arranged so as to oppose each other in a vehicle front-rear direction.

In the vehicle battery installation structure of the first aspect, the equipment case and the cross member are arranged opposing each other in the vehicle front-rear direction. This means that displacement of the equipment case toward the vehicle front side during a head on collision can be limited by the cross member. This thereby enables displacement of the equipment due to input of external load to be suppressed. This accordingly enables equipment wires being severed and collision with various other equipment that would occur accompanying displacement of the equipment case to be suppressed from occurring.

A vehicle battery installation structure of a second aspect is the vehicle battery installation structure of the first aspect, wherein the cross member includes an extension portion extending upward from a lower end portion, and a rectangular profile cross-section portion that is coupled to an upper end of the extension portion and has a rectangular profile cross-section in vehicle side view.

In the vehicle battery installation structure of the second aspect, due to the cross member including the rectangular profile cross-section portion, the cross member has a higher rigidity in the vehicle front-rear direction than cases only configured by an extension portion. Moreover, due to including the extension portion, the height direction overlap length with the equipment case is longer than configurations lacking the extension portion, meaning that the equipment case displacement suppressing effect is high.

The vehicle battery installation structure of the third aspect is the vehicle battery installation structure of the first aspect, wherein the cross member is formed by superimposing at least two layers of a sheet material.

In the vehicle battery installation structure of the third aspect, the cross member has a higher rigidity that cases in which the cross member is formed from a single layer of sheet material. This means that the equipment case displacement limiting effect is high.

A vehicle battery installation structure of a fourth aspect is the vehicle battery installation structure of the first aspect, wherein a overhanging portion is formed at a vehicle front side portion of the equipment case so as to jut out above the cross member, and the overhanging portion is fixed to the cross member in a state of being placed on the cross member.

In the vehicle battery installation structure of the fourth aspect, the equipment case displacement limiting effect is raised by the equipment case being fixed to the cross member.

A vehicle battery installation structure of a fifth aspect is the vehicle battery installation structure of the fourth aspect, wherein the overhanging portion is fixed to the cross member via plural fastening portions, which are arranged spaced apart in a vehicle width direction.

In the vehicle battery installation structure of the fifth aspect, the equipment case can be fixed to the cross member at plural locations in the vehicle width direction, and so the equipment case displacement limiting effect is raised.

The vehicle battery installation structure of a sixth aspect is the vehicle battery installation structure of the fourth aspect, wherein in the equipment case, a portion further to a vehicle front-rear direction rear side than the overhanging portion is arranged spaced apart from the cross member in the vehicle front-rear direction.

In the vehicle battery installation structure of the sixth aspect, the main body portion and the cross member will make contact only after a fixing section and/or the overhanging portion have/has broken, thereby facilitating the load-bearing ability to be exhibited sufficiently by the fixing section, between and the overhanging portion and the cross member, and by the overhanging portion.

The present disclosure enables, in a configuration in which equipment is arranged above an energy storage cell, equipment displacement due to input of external load to be suppressed.

### BRIEF DESCRIPTION OF THE DRAWINGS

Exemplary embodiments of the present invention will be described in detail based on the following figures, wherein:
Fig. 1 is an exploded perspective view illustrating relevant portions of a vehicle battery installation structure according to an exemplary embodiment of the present disclosure;
Fig. 2 is a side view cross-section illustrating an example of a vehicle battery installation structure according to an exemplary embodiment of the present disclosure.
Fig. 3A is a partial enlargement of a side view cross-section illustrating an example of a cross member according to an exemplary embodiment of the present disclosure;
Fig. 3B is a partial enlargement of a side view cross-section illustrating a Modified Example 1 of a cross member according to an exemplary embodiment of the present disclosure;
Fig. 3C is a partial enlargement of a side view cross-section illustrating a Modified Example 2 of a cross member according to an exemplary embodiment of the present disclosure;
Fig. 3D is a partial enlargement of a side view cross-section illustrating a Modified Example 3 of a cross member according to an exemplary embodiment of the present disclosure;
Fig. 4A is a partial enlargement of a side view cross-section illustrating an example of a projection of an equipment pedestal and a resin member according to an exemplary embodiment of the present disclosure;
Fig. 4B is a partial enlargement of a side view cross-section illustrating an example of a projection of an equipment pedestal, an indentation of an upper cover, and a resin member according to an exemplary embodiment of the present disclosure;
Fig. 4C is a partial enlargement of a side view cross-section illustrating a modified example of a resin member according to an exemplary embodiment of the present disclosure;
Fig. 5A is a bottom view illustrating an example of projections of an equipment pedestal according to an exemplary embodiment of the present disclosure;
Fig. 5B is a bottom view illustrating a Modified Example 1 of projections of an equipment pedestal according to an exemplary embodiment of the present disclosure;
Fig. 5C is a bottom view illustrating a Modified Example 2 of projections of an equipment pedestal according to an exemplary embodiment of the present disclosure;
Fig. 5D is a bottom view illustrating a Modified Example 3 of projections of an equipment pedestal according to an exemplary embodiment of the present disclosure; and
Fig. 6 is a partial enlargement of a side view cross-section illustrating a Modified Example 1 of a projection of an equipment pedestal according to an exemplary embodiment of the present disclosure.

### DETAILED DESCRIPTION

Description follows regarding a vehicle battery installation structure according to an exemplary embodiment of the present disclosure, with reference to the drawings. Configuration elements indicated using the same reference numerals across the drawings means that they are the same configuration elements. However, unless explicitly stated otherwise in the present specification, each of the configuration elements is not limited to being one thereof, and there may be plural thereof.

Moreover, sometimes description and reference numerals are omitted for duplicate configuration across the drawings. Note that the present disclosure is not limited to the following exemplary embodiment and, within the scope of the object of the present disclosure, appropriate modifications may be implemented thereto, such as omitting configuration, substituting with different configuration, combining an exemplary embodiment with various modified examples, and the like.

### Vehicle Structure

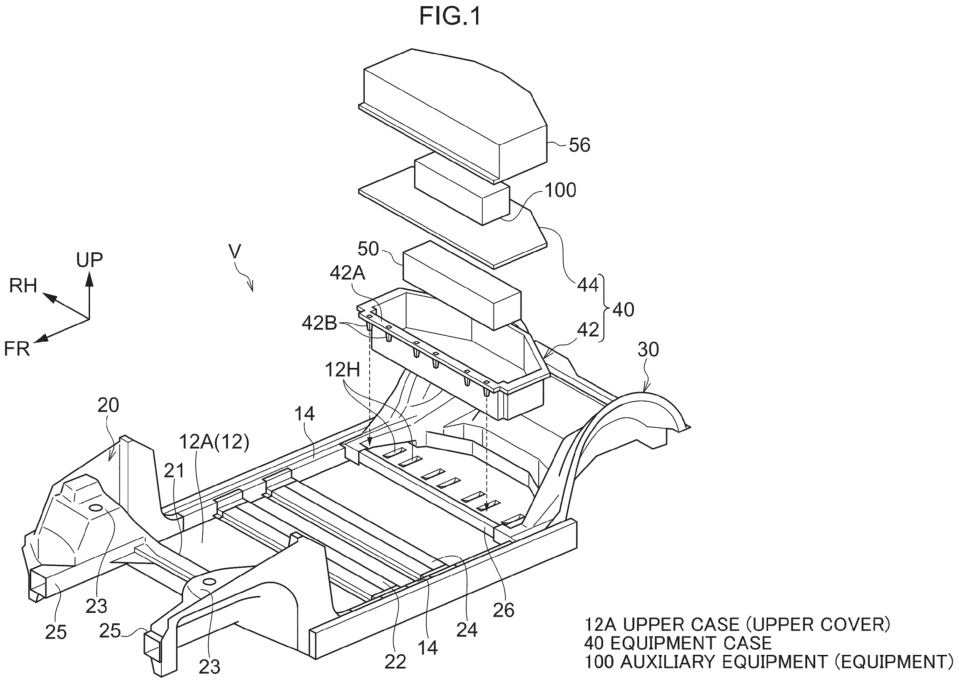

Fig. 1 is a perspective view illustrating relevant portions of a vehicle V applied with a vehicle battery installation structure according to an exemplary embodiment of the present disclosure. Arrow FR, arrow UP, and arrow RH in the drawings respectively indicate vehicle forward, vehicle upward, and vehicle rightward directions of a vehicle V.

As illustrated in Fig. 1, a battery case 12 is provided at a front-rear direction central section of the vehicle V. The battery case 12 is provided at a lower section of the vehicle. Moreover, a floor panel is not provided to the vehicle V of the present exemplary embodiment because the upper face of the battery case 12 configures a vehicle cabin floor section.

A left-right pair of rockers 14 that extend in a vehicle front-rear direction are provided at the two vehicle width direction sides of the battery case 12. The rockers 14 are framework members formed with a substantially rectangular closed cross-section profile. The battery case 12 is attached to the rockers 14 using non-illustrated fasteners.

The front end portions of the rockers 14 are connected to a front module 20. The rear end portions of the rockers 14 are connected to a rear module 30. The front module 20 and the rear module 30 are each, for example, integrally formed by casting.

The front module 20 is, for example, configured including a dash panel section 21, suspension tower sections 23, front side member sections 25, and the like.

The dash panel section 21 extends in the vehicle width direction and vehicle height direction, and partitions between a vehicle cabin internal space, and a vehicle cabin external space. The front side member sections 25 extend from the two vehicle width direction end portions of the dash panel section 21 toward the vehicle front side, and configure load paths during a head on collision. The suspension tower sections 23 are provided as a left-right pair, and are configured so as to be able to support respective non-illustrated suspensions.

A first cross member 22 and a second cross member 24, which are cross members, are provided at vehicle front-rear direction central portions of the rockers 14. The first cross member 22 and the second cross member 24 respectively extend along the vehicle width direction above the battery case 12, and are provided spanning between the left-right pair of rockers 14. A non-illustrated vehicle front seat is attached to the first cross member 22 and the second cross member 24.

A third cross member 26, which is a cross member, is provided at vehicle front-rear direction rear side portions of the rockers 14. The third cross member 26 also extends in the vehicle width direction above the battery case 12, spanning between the left-right pair of rockers 14. A detailed description of the configuration of the third cross member 26 is given later.

### Battery Case

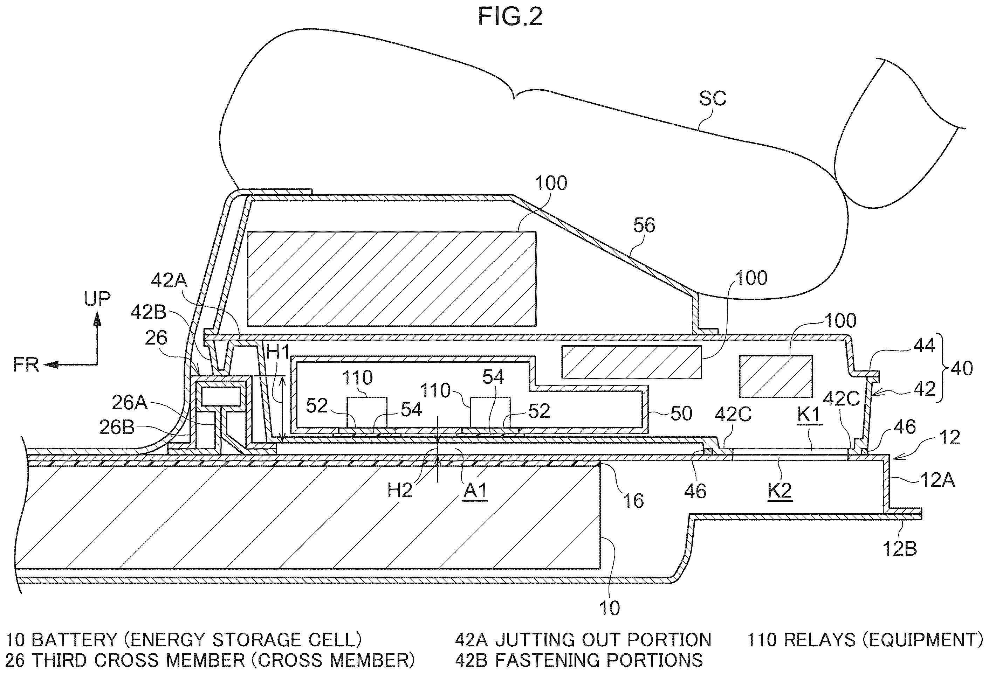

As illustrated in Fig. 2, the battery case 12 is formed substantially in a box shape including an upper case 12A and a lower case 12B. A battery 10 (energy storage cell) serving as a battery is installed inside the battery case 12.

The upper case 12A is arranged above the battery 10 as an upper cover for covering the battery 10 and, as stated above, the upper face thereof configures the vehicle cabin floor section. An opening portion K2 is formed in a vehicle front-rear direction rear end portion of the upper case 12A. An internal space of the battery case 12, and an internal space of an equipment case 40, described later, are in communication with each other through the opening portion K2.

Note that the battery case 12 may be configured with only an upper cover covering above the battery 10. In such cases, a member may be provided to support the battery 10 from below, instead of the lower case 12B.

### Equipment Case

The equipment case 40 is arranged above the battery case 12. The equipment case 40 includes the equipment pedestal 42 and a lid 44. The equipment pedestal 42 is a casing formed in a box shape having an open upper end.

There is no particular limitation to the substance employed to make the equipment pedestal 42, however, the substance preferably has a high thermal conductivity, such as aluminum or the like, from the perspective of raising performance in the dissipation of heat of heat emitting equipment such as relays 110 and the like, as described later. Moreover, the equipment pedestal 42 is more preferably a die-cast member (casting) formed by casting aluminum or the like.

The lid 44 is a sealing member for closing off an opening portion at an upper end of the equipment pedestal 42, and is fixed to the equipment pedestal 42 using non-illustrated fastening members.

A overhanging portion 42A, overhanging above the third cross member 26, is formed at a vehicle front side portion of the equipment pedestal 42, with the overhanging portion 42A fixed to the third cross member 26 in a state in which the overhanging portion 42A has been placed on the third cross member 26. This fixing structure will be described later.

Note that in the present disclosure, the equipment pedestal 42 is not necessarily always a casting, and may alternatively be formed by a metal (for example aluminum or stainless steel) sheet material or from a resin or the like. Heat is dissipated from heat emitting equipment such the relays 110 and the like to the equipment pedestal 42 even when the equipment pedestal 42 is formed from a metal sheet material or resin.

### Junction Box

A junction box 50 housing heat emitting equipment, such as the relays 110, is arranged inside the equipment case 40. The junction box 50 is mounted to the equipment pedestal 42, and is fixed to the equipment pedestal 42 using non-illustrated fastening members.

Moreover, as well as the junction box 50, auxiliary equipment 100 is also provided inside the equipment case 40. The auxiliary equipment 100 includes, for example, a power distribution unit (PDU), an electronic control unit (ECU), and the like.

The relays 110 and the auxiliary equipment 100 are each coupled to the battery 10 by a non-illustrated bus bar, wiring harness, or the like, and are electrically connected to the battery 10. The heat emitting equipment, such as the relays 110, are sometimes driven by electrical power supplied from the battery 10 and emit heat accompanying driving.

The relays 110 and the junction box 50 are disposed locally above the battery 10 and the upper case 12A. Being "disposed locally" indicates being arranged at a vehicle front-rear direction part (for example a rear side) of the battery 10 that extends in the vehicle front-rear direction and the width direction.

Opening portions are formed in the bottom of the junction box 50, and heat dissipation sheets 52 are arranged at these opening portions. The relays 110 are arranged above the heat dissipation sheets 52. Namely, the heat dissipation sheets 52, which are thermoconductive members, are arranged between the relays 110 and the equipment pedestal 42. Heat generated when the relays 110 have been driven is transmitted to the equipment pedestal 42 through the heat dissipation sheets 52. Moreover, electrical insulation sheets 54 are arranged below the heat dissipation sheets 52.

Note that in the present disclosure the heat dissipation sheets 52 are not necessarily always provided, and may be omitted as appropriate. In such cases, the opening portion does not need to be formed to the bottom of the junction box 50, and the electrical insulation sheets 54 may also be omitted. Heat from the relays 110 is transmitted to the equipment pedestal 42 even without providing the heat dissipation sheets 52.

### Auxiliary Equipment Cover

The auxiliary equipment 100 is arranged in a cascade. Specifically, the auxiliary equipment 100 is arranged above the equipment case 40, and the auxiliary equipment 100 is covered by an auxiliary equipment cover 56. The auxiliary equipment cover 56 is provided above the equipment case 40, and supports a seat cushion SC of a rear vehicle seat from a vehicle lower side. Note that a separate member may be interposed between the auxiliary equipment cover 56 and the seat cushion SC.

### Third Cross Member

As illustrated in Fig. 1, the third cross member 26 spans between the rockers 14 along the vehicle width direction above the battery case 12.

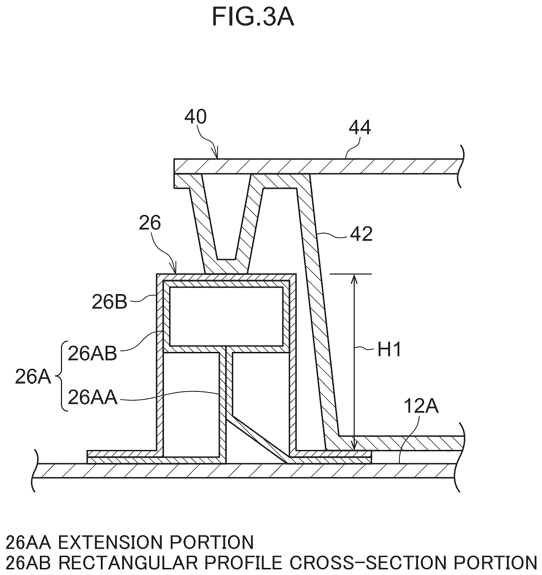

As illustrated in Fig. 3A, the third cross member 26 is formed by superimposing two layers of metal sheet material. Specifically, the third cross member 26 is formed including a cross member main body 26A and a reinforcement member 26B, with the reinforcement member 26B on the outside formed so as to cover the cross member main body 26A on the inside.

The cross member main body 26A includes an extension portion 26AA extending upward from a lower end portion thereof, and a rectangular profile cross-section portion 26AB that is coupled to an upper end of the extension portion 26AA and has a rectangular profile cross-section when in vehicle side view.

The extension portion 26AA is formed by a sheet material being doubled over and superimposed on itself in the vehicle front-rear direction. The superimposed sheet material is bent respectively toward the vehicle front direction and rear direction at an upper end of the extension portion 26AA. These bent portions then extend further upward and are then connected together to form the rectangular profile cross-section portion 26AB.

An upper face portion of the reinforcement member 26B, which extends in the vehicle front-rear direction in vehicle side view, is arranged so as to contact the rectangular profile cross-section portion 26AB of the cross member main body 26A. The reinforcement member 26B is bent downward from the two vehicle front-rear direction ends of the upper face portion, and covers the cross member main body 26A.

The lower end portions of the cross member main body 26A and of the reinforcement member 26B are respectively bent in the vehicle front and rear directions, and are superimposed on each other.

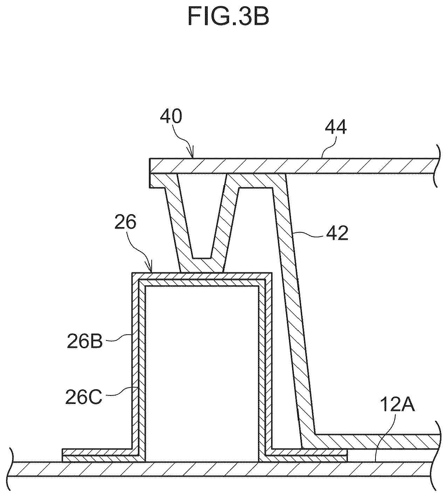

Note that the configuration of the third cross member 26 is not limited to that described above. For example, instead of the cross member main body 26A of Fig. 3A, a cross member main body 26C of Fig. 3B may be employed. The cross member main body 26C, similarly to the reinforcement member 26B, is formed by bending both vehicle front-rear direction ends of an upper face portion thereof downward. The lower end portions of the cross member main body 26C are then bent toward the vehicle front-rear directions, and are superimposed on the reinforcement member 26B.

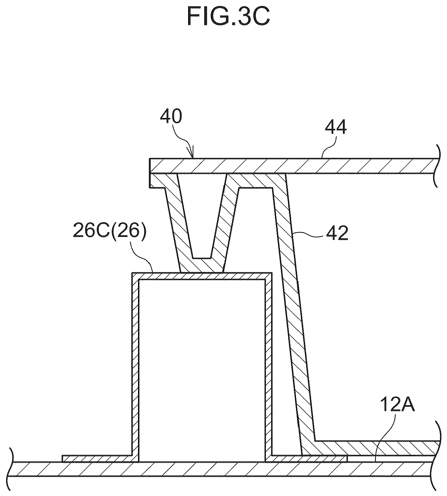

Moreover, as illustrated in Fig. 3C, the above cross member main body 26C may be formed from a single sheet as the third cross member 26. The cross member main body 26C is, similarly to the reinforcement member 26B, formed by bending both vehicle front-rear direction ends of an upper face portion thereof downward. The lower end portions of the cross member main body 26C are the bent toward the vehicle front-rear directions, and are superimposed on the reinforcement member 26B.

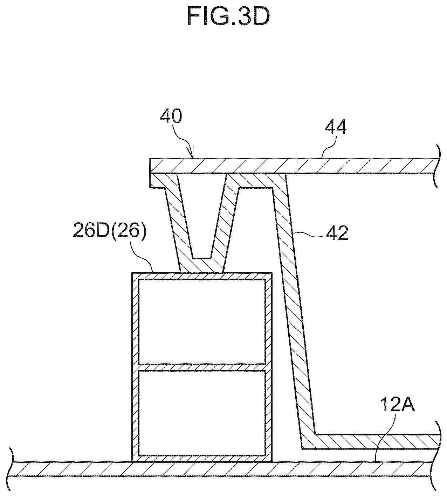

Moreover, the third cross member 26 may be formed by a molded product using extrusion, such as a cross member main body 26D illustrated in Fig. 3D. Or, the third cross member 26 may be formed by superimposing three or more layers of sheet material.

### Equipment Case Retaining Structure

As illustrated in Fig. 2, the equipment case 40 is arranged at the vehicle rear side of the third cross member 26. At least part of the equipment case 40 and at least part of the third cross member 26 are arranged opposing each other in the vehicle front-rear direction.

Specifically, the equipment case 40 and the third cross member 26 are arranged so as to overlap with a length H1 in the height direction when viewed along the vehicle front-rear direction. The equipment case 40 and the third cross member 26 are arranged so as to oppose each other in the vehicle front-rear direction over a range of length H1 in the height direction.

Note that the length H1 is freely selected and, for example, the length H1 is shorter than the illustrated dimension if the bottom face of the equipment pedestal 42 is arranged at a higher position.

Moreover, as described above, the overhanging portion 42A of the equipment pedestal 42 is fixed to the third cross member 26 in a state of being placed on the third cross member 26. Specifically, the overhanging portion 42A is fixed to the third cross member 26 through fastening portions 42B, as illustrated in Fig. 1.

The fastening portions 42B are downward protruding projections, with plural thereof formed to a lower face of the overhanging portion 42A. The plural fastening portions 42B are arranged spaced apart in the vehicle width direction, and the lower end faces thereof are arranged opposing the upper face of the third cross member 26.

As illustrated in Fig. 2, the fastening portions 42B are each formed in a hollow and bottomed tubular shape that is open at the upper end thereof. Bottom portions formed to the lower end faces of each of the fastening portions 42B are fixed to upper end faces of the third cross member 26 using non-illustrated fastening members such as bolts or the like. The equipment case 40 is thereby fixed to the third cross member 26. Moreover, load from the equipment case 40 and its content is supported by the third cross member 26 through the fastening portions 42B.

In a state in which the equipment case 40 is fixed to the third cross member 26, a portion (main body portion) of the equipment case 40 further rearward than the overhanging portion 42A is arranged spaced apart from the third cross member 26 in the vehicle front-rear direction.

### Fixing Section

A fixing section 42C projecting downward from a lower face of the equipment pedestal 42 is formed to a vehicle front-rear direction rear end portion of the equipment pedestal 42. The fixing section 42C is a portion at the rear of the junction box 50 to fix the rear end portion of the equipment pedestal 42 to the upper case 12A, and the bottom face of the fixing section 42C is fixed to the upper case 12A by bonding or the like.

An opening portion K1 is formed in the fixing section 42C. In other words, the fixing section 42C is formed by a rim of the opening portion K1 formed in the equipment pedestal 42. The opening portion K1 is arranged above an opening portion K2 of the upper case 12A. The internal space of the battery case 12 and the internal space of the equipment case 40 are thereby in communication with each other.

The opening portions K1 and K2 are formed further to the vehicle rear side than the battery 10. Bus bars, wiring harnesses, or the like are inserted through the opening portions K1 and K2 for coupling the battery 10 and the auxiliary equipment 100, and the junction box 50 and the battery 10.

### Seal Structure

A sealing member 46 is arranged between the equipment pedestal 42 and the upper case 12A. The sealing member 46 is, for example, a liquid gasket, and is formed so as to surround the fixing section 42C. Namely, the sealing member 46 is formed so as to surround the opening portion K1. The sealing member 46 accordingly secures waterproofing between the internal space of the equipment case 40 and the internal space of the battery case 12.

### Resin Member

A plate shaped resin member 16 is arranged between the battery 10 and the upper case 12A. The resin member 16 extends in both the vehicle front-rear direction and the vehicle width direction, and covers the battery 10 from above.

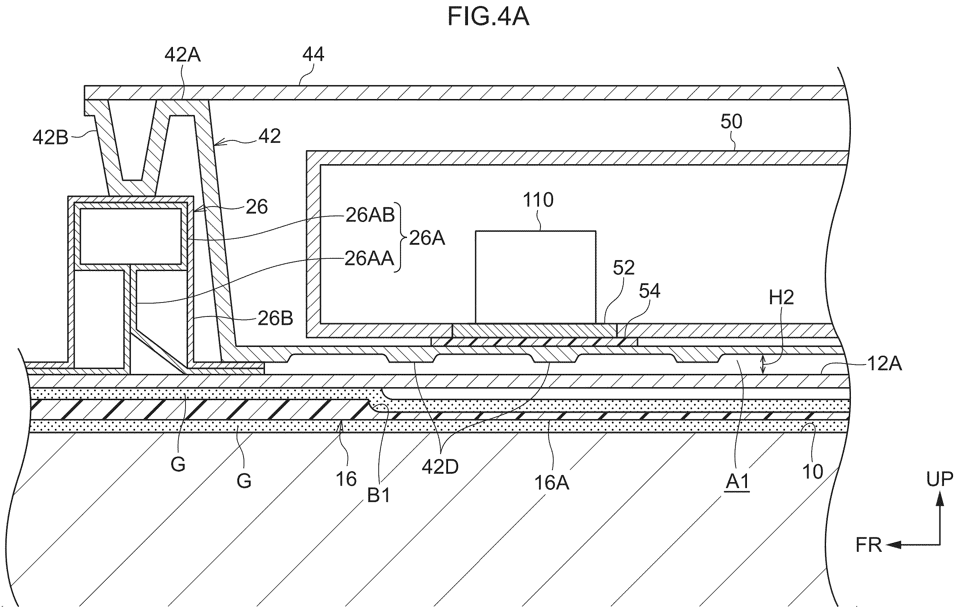

As illustrated in Fig. 4A, the battery 10 and the resin member 16 are adhered together by an adhesive G. The upper case 12A and the resin member 16 are also adhered together by the adhesive G.

The resin member 16 includes a thinned portion 16A, which has an upper face lower than the upper face of other portions of the resin member 16, provided below the junction box 50 and below the relays 110. Note that the thinned portion 16A and the adhesive G are omitted from illustration in Fig. 2.

As illustrated in Fig. 1, plural indentations 12H are formed indented downward in the upper case 12A. The is no particular limitation to the profile of the indentations 12H, however, as an example, the indentations 12H are each formed with a thinned shape by a pair of wall portions extending downward from the upper face of the upper case 12A, and a bottom portion coupling lower end portions of the pair of wall portions together. The indentations 12H are accordingly configured with groove shapes along the vehicle front-rear direction, with plural thereof being arranged along the vehicle width direction.

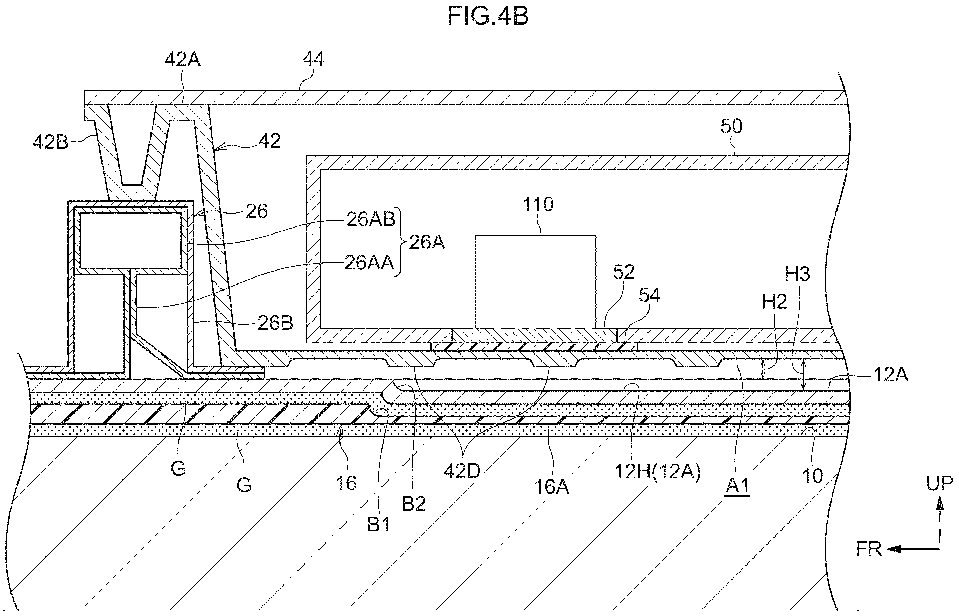

Fig. 4B is a side view cross-section of the upper case 12A at a portion where one of the indentations 12H is formed. As illustrated, the indentation 12H is formed above the thinned portion 16A of the resin member 16. Moreover, the indentation 12H is formed so as to follow the profile of the thinned portion 16A.

Reference here to "follow the profile of the thinned portion 16A" means that a curved portion B1 of the resin member 16, and curved portion B2 of the upper case 12A are, in side view, the same or similar shapes to each other, and are arranged in proximity to each other. The curved portion B1 is a boundary between the thinned portion 16A of the resin member 16 and other portions thereof. The curved portion B2 is a boundary between the indentation 12H of the upper case 12A and other portions thereof.

In such an embodiment, the indentations 12H of the upper case 12A and the thinned portion 16A of the resin member 16 are arranged below the relays 110.

Note that the indentations 12H may each have a profile that does not follow the profile of the thinned portion 16A. The curved portion B1 of the resin member 16 and the curved portion B2 of the upper case 12A may have different profiles, and may be arranged separated from each other.

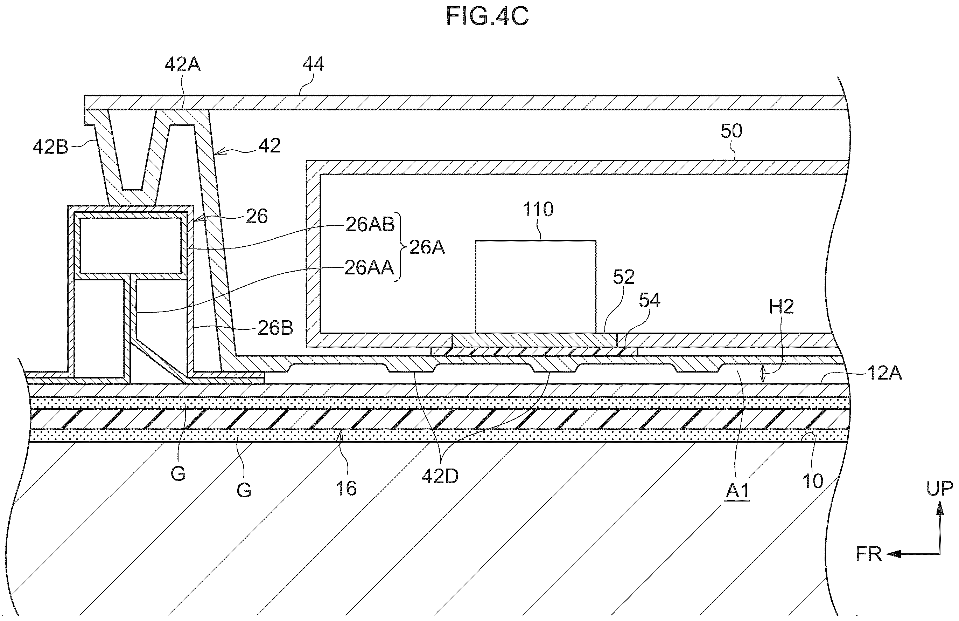

Moreover, the thinned portion 16A is not necessarily formed to the resin member 16. For example, the resin member 16 may be formed so as to have a uniform thickness on progression along the vehicle front-rear direction, as illustrated in Fig. 4C. Furthermore, the resin member 16 may be omitted in the present disclosure.

Moreover, the indentations 12H may or may not be formed to the upper case 12A irrespective of the presence or absence of a resin member 16, and moreover, when a resin member 16 is provided, irrespective of the presence or absence of a thinned portion 16A.

### Heat Insulation Structure

As illustrated in Fig. 2, heat insulation is provided below the relays 110 and below the junction box 50 by an air layer A1 between the equipment pedestal 42 and the upper case 12A.

As described above, the fixing section 42C is formed to the equipment pedestal 42 so as to project downward from the bottom face of the equipment pedestal 42, with the fixing section 42C fixed to the upper case 12A. A thickness H2 of the air layer A1 is equivalent to a projection height of the fixing sections 42C.

As illustrated in Fig. 4B, the air layer A1 is in communication with the indentations 12H of the upper case 12A. This means that an in-communication air layer of thickness H3 present at the portions where the indentations 12H are formed is thicker than the thickness H2 at other portions.

Note that greater heat insulation performance can be secured by filling the air layer A1 with various heat insulation materials, such as fibers, foamed resin, or the like.

### Heat Dissipation Structure

As illustrated in Fig. 4A, projections 42D that project downward toward the air layer A1 are formed in the lower face of the equipment pedestal 42. The thickness of the equipment pedestal 42 is thicker at the portion where the projections 42D are formed than at other portions. This means that the heat capacity of the equipment pedestal 42 is larger than configurations lacking the projections 42D.

Moreover, due to the projections 42D, the surface area of the lower face of the equipment pedestal 42 is larger than without the projections 42D. This facilitates heat dissipation from the equipment pedestal 42 to the air layer A1.

The projection height of the projections 42D is lower than the thickness H2 of the air layer A1 (the projection height of the fixing section 42C). Interference is thereby avoided between the projections 42D and the upper case 12A.

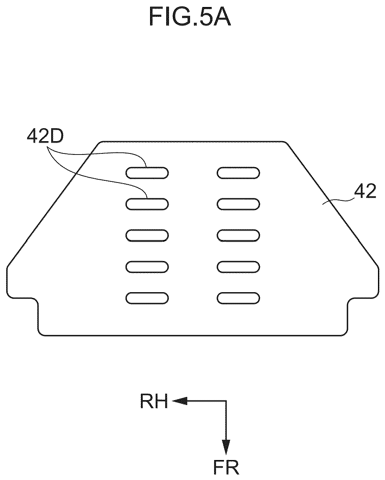

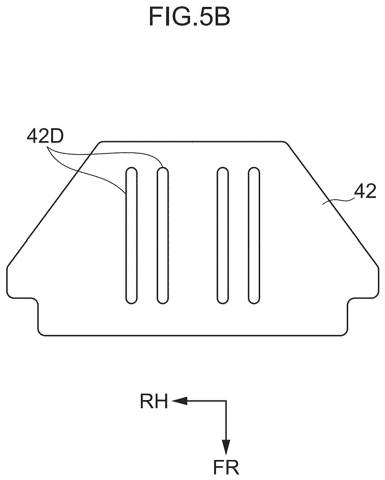

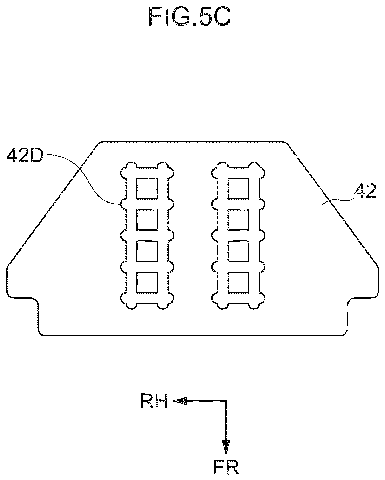

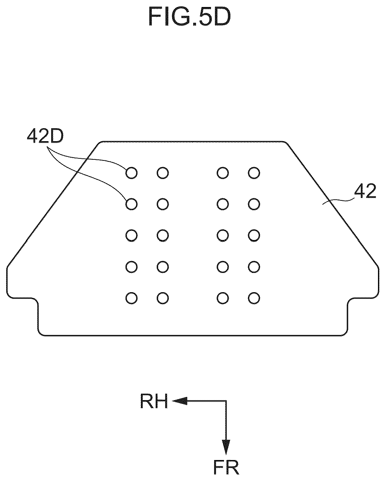

Note that the profile of the projections 42D is not particularly limited and, for example as illustrated in Fig. 5A, the projections 42D may be formed in rib shapes along the vehicle width direction. Moreover, as illustrated in Fig. 5B, the projections 42D may be formed in rib shapes along the vehicle front-rear direction. Furthermore, as illustrated in Fig. 5C, the projections 42D may be formed in lattice shapes along both the vehicle width direction and the vehicle front-rear direction. Furthermore, as illustrated in Fig. 5D, the projections 42D may be formed in dot shapes, such as circles or the like.

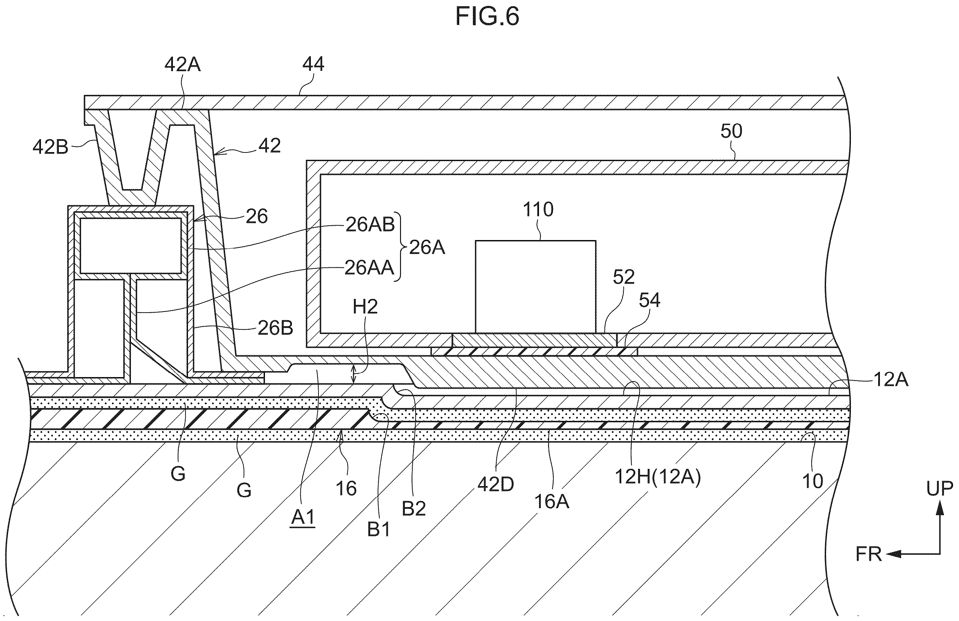

The size, length, height, placement position, placement number, and the like of the projections 42D is freely selected. For example, the projections 42D formed in rib shapes along the vehicle front-rear direction as illustrated in Fig. 5B may, as illustrated in Fig. 6, be arranged above the indentations 12H of the upper case 12A. In such cases, the projections 42D can be inserted into the indentations 12H, and the height of the projections 42D may be higher than the thickness H2 of the air layer A1.

Note that the projections 42D are not necessarily always provided in the present disclosure. For example, instead of the projections 42D, upward indented indentations may be provided in the lower face of the equipment pedestal 42. Alternatively, the lower face of the equipment pedestal 42 may be formed smooth, without providing either the projections 42D or indentations.

### Operation and Advantageous Effects

### Heat Insulation and Heat Dissipation Action

In the vehicle battery installation structure according to an exemplary embodiment of the present disclosure, when the heat emitting equipment, such as the relays 110 or the like illustrated in Fig. 2, are driven, heat generated accompanying such driving is dissipated to the equipment pedestal 42. Heat insulation is performed by the air between the equipment pedestal 42 and the upper case 12A of the battery 10. This means that heat is suppressed from being transferred from the equipment pedestal 42 to the battery 10 through the upper case 12A, and the battery 10 is suppressed from being heated locally.

Moreover, due to heat insulation between the equipment pedestal 42 and the upper case 12A, heat generated accompanying driving of the battery 10 is suppressed from being transferred to the equipment pedestal 42 through the upper case 12A. This means, for example, that local cooling of the battery 10 is suppressed in cases in which the heat emitting equipment, such as the relays 110, are not being driven.

In such a vehicle battery installation structure in which heat transmission between the heat emitting equipment, such as the relays 110, and the battery 10 is suppressed by heat insulation in this manner, the effect on the battery 10 of heat from the equipment can be suppressed.

Moreover, in the vehicle battery installation structure according to an exemplary embodiment of the present disclosure, the heat dissipation sheets 52 are provided as thermoconductive members between the relays 110 and the equipment pedestal 42. This facilitates heat dissipation from the relays 110 to the equipment pedestal 42 compared to cases not provided with the heat dissipation sheets 52, enabling the relays 110 to be suppressed from overheating.

Moreover, in the vehicle battery installation structure according to an exemplary embodiment of the present disclosure, the equipment pedestal 42 is a casting. This means that the thermal conductivity is higher than cases in which the equipment pedestal 42 is formed from a metal sheet material, a resin, or the like, facilitating heat dissipation from the heat emitting equipment, such as the relays 110, to the equipment pedestal 42. This thereby enables the heat emitting equipment, such as the relays 110, to be suppressed from overheating.

Moreover, in the vehicle battery installation structure according to an exemplary embodiment of the present disclosure, heat insulation is performed by the air layer A1 between the equipment pedestal 42 and the upper case 12A. Air is a gas, and so there is no interference even when there are indentations and protrusions (for example, the projections 42D of the equipment pedestal 42, see Fig. 4A) present on the equipment pedestal 42 and the upper case 12A. This means that the profiles of the equipment pedestal 42 and the upper case 12A are less likely to be restricted than cases in which a heat insulation material is installed by being laid out thereon.

Moreover, the thermal conductivity of air is lower than resin or metal, and so the heat dissipated from the equipment pedestal 42 is not liable to be transmitted to the upper case 12A.

### Indentation Operation

Moreover, in the vehicle battery installation structure according to an exemplary embodiment of the present disclosure, as illustrated in Fig. 4B, the upper case 12A includes the downwardly indented indentations 12H below the relays 110 and the junction box 50. A spacing between the equipment pedestal 42 and the upper case 12A (an air layer of thickness H3) is wider at the indentations 12H than at other portions thereof (an air layer of thickness H2). This means that the heat insulation effect is higher than configurations lacking the indentations 12H.

### Resin Member Operation

Moreover, in the vehicle battery installation structure according to an exemplary embodiment of the present disclosure, the plate-shaped resin member 16 is arranged between the battery 10 and the upper case 12A. This means that a load acting locally on the upper case 12A configuring the vehicle cabin floor is distributed by the resin member 16. This thereby enables localized load to be suppressed from acting on the battery 10.

Moreover, the resin member 16 includes the thinned portion 16A, which has an upper face lower than the upper face of other portions, below the relays 110 and the junction box 50. The upper case 12A includes the indentations 12H above the thinned portion 16A. In other words, a space for forming the indentations 12H in the upper case 12A is formed by the thinned portion 16A of the resin member 16.

The indentations 12H are formed above the thinned portion 16A, and so this enables the indentation dimension to be larger than cases in which the indentations 12H are formed at other portions. This thereby enables the heat insulation effect from the indentations 12H of the upper case 12A to be raised while suppressing localized load from acting on the battery 10 due to the resin member 16.

### Projection Operation

Moreover, in the vehicle battery installation structure according to an exemplary embodiment of the present disclosure, the projections 42D are formed to the lower face of the equipment pedestal 42 so as to project downward toward the air layer A1. The surface area of the lower face of the equipment pedestal 42 is accordingly larger due to the projections 42D, facilitating heat dissipation from the equipment pedestal 42 to the air layer A1. This accordingly means that heat dissipation from the heat emitting equipment, such as the relays 110, to the equipment pedestal 42 is facilitated compared to without the projections 42D.

On the other hand, due to air having a thermal conductivity lower than resin and metal, the heat dissipated from the equipment pedestal 42 is not liable to be transmitted from the air layer A1 between the equipment pedestal 42 and the upper case 12A to the upper case 12A. This thereby enables heat to be suppressed from being transmitted to the battery 10.

Note that, as stated above, the profile of the projections 42D is not particularly limited. Suppose, as illustrated in Fig. 5C, the projections 42D are formed in a lattice shape, then this facilitates making the surface area of the lower face of the equipment pedestal 42 larger than cases in which the projections 42D are formed in linear rib shapes or dot shapes.

Alternatively suppose, as illustrated in Fig. 5B, the projections 42D are formed in rib shapes along the vehicle front-rear direction, then this enables the projections 42D to be arranged above the indentations 12H, as illustrated in Fig. 6. The projections 42D can be inserted into the indentations 12H in such a configuration. This thereby facilitates heat dissipation from the equipment pedestal 42 to the air layer A1 and the air of the indentations 12H.

### Lid Operation

Moreover, as illustrated in Fig. 2, the equipment pedestal 42 is formed in a box shape with an open upper end, and the equipment case 40 includes the lid 44 closing off the opening portion at the upper end of the equipment pedestal 42.

In this manner, the auxiliary equipment 100 and the heat emitting equipment, such as the relays 110, are housed in the box shaped space configured by the equipment pedestal 42 and the lid 44. This means that there is a higher ability to protect the auxiliary equipment 100 and the heat emitting equipment, such as the relays 110, than a configuration lacking the lid 44.

On the other hand, the auxiliary equipment 100 and the heat emitting equipment, such as the relays 110, are housed in the closed box shaped space, and so heat dissipated from the heat emitting equipment, such as the relays 110, is readily trapped inside this space. However, due to the configuration of the present disclosure, such heat is absorbed by the equipment pedestal 42 and the heat can be dissipated by the projections 42D.

### Third Cross Member Operation

In the vehicle battery installation structure according to an exemplary embodiment of the present disclosure, at least part of the equipment case 40 and at least part of the third cross member 26 are arranged opposing each other in the vehicle front-rear direction.

This means that displacement of the equipment case 40 toward the vehicle front side during a head on collision can be limited by the third cross member. This accordingly enables the relays 110 and the like to be suppressed from displacing accompanying displacement of the equipment case 40, and suppressed from severing wires, and colliding with various other equipment.

Moreover, as illustrated in Fig. 3A, the third cross member 26 is formed by the cross member main body 26A and the reinforcement member 26B being superimposed on each other. This means that the rigidity is higher than a configuration in which the third cross member 26 is a single sheet, and the displacement limiting effect of the equipment case 40 is also higher.

Moreover, the cross member main body 26A includes the extension portion 26AA extending upward from a lower end portion thereof, and the rectangular profile cross-section portion 26AB, having a rectangular profile cross-section when in vehicle side view, coupled to the upper end of the extension portion 26AA.

Due to the rectangular profile cross-section portion 26AB having the rectangular profile cross-section, the rigidity in the vehicle front-rear direction is higher than cases in which only the extension portion 26AA is provided. Moreover, due to including the extension portion 26AA, a height direction overlap length (length H1) with the equipment case 40 can be made longer than configurations lacking the extension portion 26AA, meaning that the equipment case 40 displacement suppressing effect is high.

### Jutting Out Portion and Fastening Portion Operation

In the vehicle battery installation structure according to an exemplary embodiment of the present disclosure, the equipment case 40 is fixed to the third cross member 26. This accordingly enables load of the equipment case 40, and of the auxiliary equipment 100 and the relays 110 housed in the equipment case 40, to be suppressed from being input to the battery 10.

The ability to protect the battery 10 is accordingly higher than configurations in which, for example, the equipment case 40 is mounted to the upper case 12A above the battery 10.

The equipment case 40 is, as illustrated in Fig. 1, fixed to the third cross member 26 via the plural fastening portions 42B, which are arranged spaced apart in the vehicle width direction. The equipment case 40 can thereby be fixed to the third cross member 26 at plural locations in the vehicle width direction. This thereby enables load of the auxiliary equipment 100 and the relays 110 to be suppressed from being input to the battery 10 across the vehicle width direction. Moreover, the displacement limiting effect of the equipment case 40 is raised compared with cases in which a fastening portion 42B is provided in a single location or the like.

As illustrated in Fig. 2, the equipment case 40 is mounted to the third cross member 26 from above, with the overhanging portion 42A interposed therebetween, and so the load of the equipment case 40 is more readily supported than cases in which the equipment case 40 is fixed to the third cross member 26 from the side.

Moreover, a portion on the equipment pedestal 42 of the equipment case 40 further to the vehicle front-rear direction rear side than the overhanging portion 42A is arranged at a spacing the third cross member 26 in the vehicle front-rear direction. This means that the equipment pedestal 42 and the third cross member 26 will make contact only after a fixing section (namely, the fastening portions 42B) between the overhanging portion 42A and the third cross member 26), and/or the overhanging portion 42A, have/has broken (yield-breakage after plastic deformation). This accordingly means that the load-bearing ability of the fixing section and the overhanging portion 42A can be exhibited sufficiently.

Moreover, as illustrated in Fig. 3A, the third cross member 26 is formed by the cross member main body 26A and the reinforcement member 26B being superimposed on each other. This means that the third cross member 26 is less liable to flex than configurations of the third cross member 26 including only a single sheet, and the suppression effect to load of the equipment case 40 being input to the battery 10 is high.

Note that the equipment case 40 is not necessarily always fixed to the third cross member 26. Even if the equipment case 40 is not fixed to the third cross member 26, as long as at least part of the equipment case 40 and at least part of the third cross member 26 are arranged opposing each other in the vehicle front-rear direction, the auxiliary equipment 100 and the relays 110 inside the equipment case 40 can still be suppressed from displacing under input of external load.

Moreover, although in the present exemplary embodiment the space between the equipment pedestal 42 and the upper case 12A is heat-insulated by the air layer A1 communicating with the indentations 12H, the exemplary embodiment of the present disclosure is not limited thereto. For example, a configuration may be adopted in which such an air layer A1 is not formed. Namely, the equipment pedestal 42 and the upper case 12A may be arranged in contact with each other.

### Supplements

The following supplements are disclosed in relation to the above exemplary embodiment.

### Supplement 1

A vehicle battery installation structure including:
an upper cover arranged above an energy storage cell;
a cross member spanning in a vehicle width direction above the upper cover; and
an equipment case arranged above the upper cover and at a vehicle rear side of the cross member, with equipment housed inside the equipment case,
wherein at least part of the equipment case and at least part of the cross member are arranged so as to oppose each other in a vehicle front-rear direction.

### Supplement 2

The vehicle battery installation structure of Supplement 1, wherein the cross member includes:
an extension portion extending upward from a lower end portion, and
a rectangular profile cross-section portion that is coupled to an upper end of the extension portion and has a rectangular profile cross-section in vehicle side view.

### Supplement 3

The vehicle battery installation structure of Supplement 1 or Supplement 2, wherein the cross member is formed by superimposing at least two layers of a sheet material.

### Supplement 4

The vehicle battery installation structure of any one of Supplement 1 to Supplement 3, wherein:
a overhanging portion is formed at a vehicle front side portion of the equipment case so as to jut out above the cross member; and
the overhanging portion is fixed to the cross member in a state of being placed on the cross member.

### Supplement 5

The vehicle battery installation structure of Supplement 4, wherein the overhanging portion is fixed to the cross member via plural fastening portions, which are arranged spaced apart in a vehicle width direction.

### Supplement 6

The vehicle battery installation structure of Supplement 4 or Supplement 5, wherein in the equipment case, a portion further to a vehicle front-rear direction rear side than the overhanging portion is arranged spaced apart from the cross member in the vehicle front-rear direction.

## Claims

1. A vehicle battery installation structure, comprising:
an upper cover arranged above an energy storage cell;
a cross member spanning in a vehicle width direction above the upper cover; and
an equipment case arranged above the upper cover and at a vehicle rear side of the cross member, with equipment housed inside the equipment case,
wherein at least part of the equipment case and at least part of the cross member are arranged so as to oppose each other in a vehicle front-rear direction.

2. The vehicle battery installation structure of claim 1, wherein the cross member includes:
an extension portion extending upward from a lower end portion, and
a rectangular profile cross-section portion that is coupled to an upper end of the extension portion and has a rectangular profile cross-section in vehicle side view.

3. The vehicle battery installation structure of claim 1, wherein the cross member is formed by superimposing at least two layers of a sheet material.

4. The vehicle battery installation structure of claim 1, wherein:
an overhanging portion is formed at a vehicle front side portion of the equipment case so as to overhang above the cross member; and
the overhanging portion is fixed to the cross member in a state of being placed on the cross member.

5. The vehicle battery installation structure of claim 4, wherein the overhanging portion is fixed to the cross member via a plurality of fastening portions, which are arranged spaced apart in a vehicle width direction.

6. The vehicle battery installation structure of claim 4, wherein, in the equipment case, a portion further to a vehicle front-rear direction rear side than the overhanging portion is arranged spaced apart from the cross member in the vehicle front-rear direction.
